# EUROPEAN PATENT SPECIFICATION

(11) **EP 4 306 421 B1**
(45) Date of publication and mention of the grant of the patent: **03.09.2025**
(21) Application number: 23185387.0
(22) Date of filing: 13.07.2023
(51) Int. Cl.: B64D 15/16, B64D 15/20, B64D 43/00, B64D 45/00, G08B 19/02

(54) **TEMPERATURE-BASED SUPPRESSION OF SPURIOUS ICE SIGNALS**
TEMPERATURBASIERTE UNTERDRÜCKUNG VON FALSCHEN EISSIGNALEN
SUPPRESSION DES SIGNAUX ERRONÉS DE LA GLACE EN FONCTION DE LA TEMPÉRATURE

(30) Priority: 15.07.2022 US 202217865999
(43) Date of publication of application: 17.01.2024
(73) Proprietor: ROSEMOUNT AEROSPACE INC., Burnsville, MN 55306-4898 (US)
(72) Inventor: LOPRESTO, Vincent R., Eagan, MN, 55123 (US)
(74) Representative: Dehns

(56) References cited:
- EP-A1- 1 396 425
- CN-A- 108 128 467
- CN-U- 207 607 654
- CN-U- 209 972 788
- US-A1- 2002 158 768
- US-A1- 2020 079 511

## Description

### BACKGROUND

The present invention relates generally to ice detection systems and specifically to verifying the accuracy of ice accretion signals produced by aircraft ice detectors.

Certain ice detectors can generate outputs which resemble icing signals in particular orientations and weather conditions. Activating the aircraft's de-icing systems in circumstances where icing conditions are not actually present can lead to wasted energy and higher costs.

US2020/079511 A1 relates to an aircraft ice detection system comprising a thermochromic device for detecting a temperature of the free air relative to a temperature threshold, a hydrochromic device for detecting an amount of moisture in the free air relative to a moisture threshold, and a controller for detecting an ice condition in response to the thermochromic device detecting a temperature less than or equal to the temperature threshold and the hydrochromic device detecting an amount of moisture greater than the moisture threshold. CN108128467A, CN207607654U, US2002/158768A1, EP1396425A1 and CN209972788U relate to other icing detection systems and methods.

### SUMMARY

According to one aspect of the invention, an ice detection system for an aircraft is defined in claim 1.

According to another aspect of the invention, a method of verifying ice accretion signals from an ice detector of an aircraft is defined in claim 11.

Preferred embodiments are defined in the dependent claims.

### BRIEF DESCRIPTION OF THE DRAWINGS

FIG. 1 is a simplified perspective view of a portion of an aircraft.
FIG. 2 is a perspective view of an ice detector.
FIG. 3 is a schematic cross-sectional view of the ice detector of FIG. 2.
FIG. 4 is a graph of the frequency shift of the ice detector as illustrated in FIGS. 2-3 undergoing cycles of ice accretion and heating.
FIG. 5 is a system logic diagram of an ice protection system.
FIG. 6 is a system diagram illustrating modules of a controller that interfaces with the ice detector of FIG. 2.
FIG. 7 is a flowchart illustrating a method of verifying icing signals generated by an ice detector.

While the above-identified figures set forth one or more embodiments of the present disclosure, other embodiments are also contemplated, as noted in the discussion. In all cases, this disclosure presents the invention by way of representation and not limitation. The figures may not be drawn to scale, and applications and embodiments of the present invention may include features and components not specifically shown in the drawings, insofar as they fall within the scope of the appended claims.

### DETAILED DESCRIPTION

Ice detection systems, such as magnetostrictive probe ice detectors, allow for icing conditions to be reliably detected and measured in most circumstances. However, there is a need for verifying signals suggesting icing conditions which are generated by these ice detection systems in some environmental conditions and mounting orientations. An algorithm can use input data from the temperature sensor present in the ice detector to determine whether icing conditions are likely to be present, allowing icing conditions signals to be distinguished from similar signals without altering the hardware of the probe or surrounding systems.

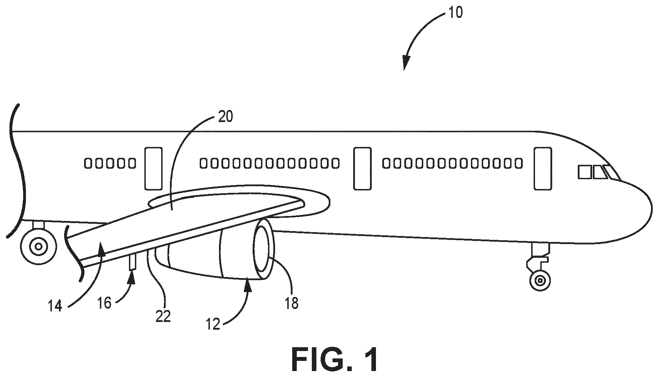

FIG. 1 is a simplified perspective view of a forward portion of aircraft 10. Aircraft 10 includes engine 12, wing 14, and ice detector 16. Engine 12 includes engine cowl 18. Wing 14 includes external wing surface 20, which includes bottom wing surface 22.

In the illustrated example, ice detector 16 is a probe ice detector located on the bottom of wing 14 such that the probe section of ice detector 16 is in contact with airflow passing underneath wing 14. Ice detector 16 can be any ice detector which is capable of detecting when icing conditions are encountered by aircraft surfaces such as wing 14, and can in some examples be a magnetostrictive ice detector. Other ice detectors 16 can be located on other external surfaces of the aircraft, such as engine cowl 18, another surface of the nacelle of engine 12, on the side of the nose behind the cockpit windows, or at another location on the fuselage.

Ice detector 16 is installed at an orientation selected to permit detection of ice conditions on wing 14 or other parts of the aircraft. Under certain circumstances, water runoff along ice detector 16 can produce a signal which resembles an icing conditions signal. The present application contemplates an approach to further distinguish between icing conditions signals and signals generated under other circumstances.

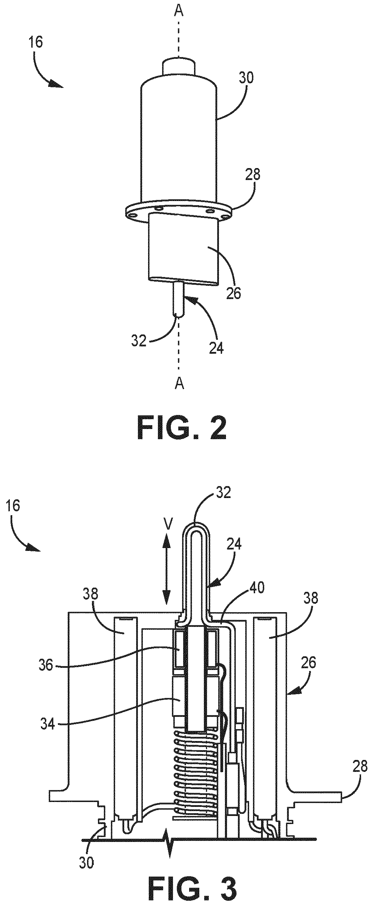

FIG. 2 is a perspective view of ice detector 16 oriented along axis A-A. In the example shown in FIG. 2, ice detector 16 includes probe 24, strut 26, mounting plate 28, and electronics housing 30. Probe 24 includes distal end 32.

Probe 24 extends from strut 26 along axis A-A, and strut 26 is disposed between probe 24 and mounting plate 28. Probe 24 can be at least partially composed of a ferromagnetic material. Probe 24 can have an approximately cylindrical shape and can taper to a rounded point at distal end 32 of probe 24. Strut 26 can have a wider diameter than probe 24 in at least one direction, and in some examples can have an approximately teardrop or airfoil shape. Mounting plate 28 can extend radially outward with respect to axis A-A and can have an approximate shape of a flat disk. Electronics housing 30 extends along axis A-A and can have an approximately cylindrical shape. As described in more detail below, strut 26 and electronics housing 30 can surround and contain electronic components of ice detector 16.

Ice detector 16 can be configured to be installed in the external surface of aircraft 10. This external surface can be wing 14. Mounting plate 28 can be configured to secure ice detector 16 to the external surface of aircraft 10 in which ice detector 16 is disposed. In the example shown in FIG. 2, mounting plate 28 includes mounting holes through which screws, bolts, or other suitable connectors can be inserted to connect ice detector 16 to an external surface of aircraft 10. In examples where ice detector 16 does not include a probe, ice detector 16 can be mounted flush to the surface of aircraft 10.

FIG. 3 is a schematic partial cross-sectional view of ice detector 16. In the example shown in FIG. 3, ice detector 16 includes probe 24 with distal end 32, strut 26, mounting plate 28, electronics housing 30, drive coil 34, feedback coil 36, strut heaters 38, and probe heater 40.

Drive coil 34 and feedback coil 36 can surround the base of probe 24. Feedback coil 36 can be situated about probe 24 such that feedback coil 36 is between drive coil 34 and distal end 32. Drive coil 34 and feedback coil 36 can form part of an oscillation circuit within ice detector 16. Strut heaters 38 can extend along strut 26 in a direction aligned with axis A-A (shown in FIG. 2). Probe heater 40 can extend along the outer surface of probe 24.

During operation, probe 24 vibrates in the direction of double-ended arrow V. The vibration of probe 24 is caused by drive coil 34, which drives probe 24 to vibrate at a set frequency. Feedback coil 36 collects vibration data from probe 24 and can communicate this vibration data to an ice sensor (not shown in FIG. 3). As described in more detail below, the frequency shift experienced by probe 24 allows ice detector 16 to detect icing conditions. When ice accretes on probe 24, strut heaters 38 and probe heater 40 can be activated to remove the ice. In some examples, the ice detector does not include an oscillation circuit and utilizes different ice sensing techniques (that is, non-magnetostrictive ice sensing techniques).

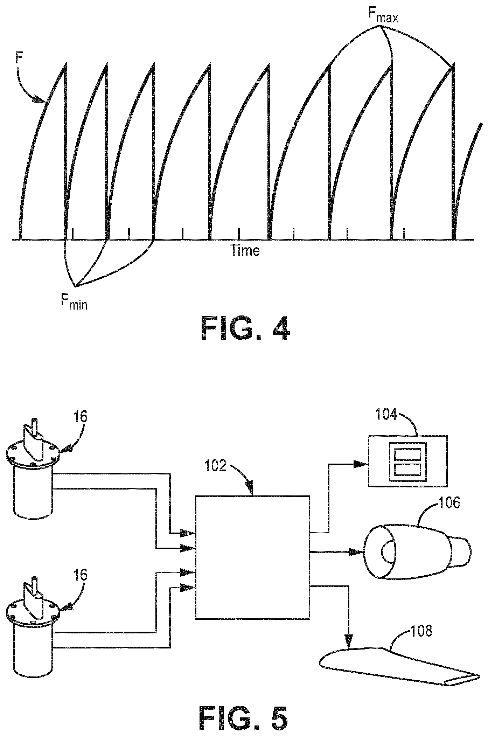

FIG. 4 is a graph of the frequency shift of ice detector 16 (illustrated in FIGS. 2-3) undergoing cycles of ice accretion and heating. Frequency shift line F includes frequency shift minimum points Fₘᵢₙ and frequency shift maximum points Fₘₐₓ.

As described above in reference to FIGS. 2-3, ice detector 16 can be a magnetostrictive ice detector containing a ferromagnetic material which changes dimension in the presence of a fluctuating electromagnetic field. Drive coil 34 causes probe 24 to vibrate at a set resonant frequency. As ice accretes on probe 24, the vibrational frequency decreases, and the frequency shift (the difference between the set resonant frequency and the experienced vibrational frequency) accordingly increases. A frequency shift maximum can be selected, and when probe 24 reaches the frequency shift maximum (shown by frequency shift maximum points Fₘₐₓ), an ice accretion signal can be generated and strut heaters 38 and probe heater 40 can be used to remove the ice from probe 24. After the ice is removed, strut heaters 38 and probe heater 40 are switched off. Probe 24 cools to the total air temperature and reaches the frequency shift minimum (shown by frequency shift minimum points Fₘᵢₙ) by returning to the set resonant frequency driven by drive coil 34. The ice accretion signals can be used to count the number and length of these ice accretion and heating cycles in order to provide information about environmental conditions to the cockpit.

FIG. 5 is a system logic diagram of ice protection system 100. Ice protection system 100 includes ice detectors 16, controller 102, cockpit annunciation system 104, engine cowl de-icing system 106, and wing de-icing system 108.

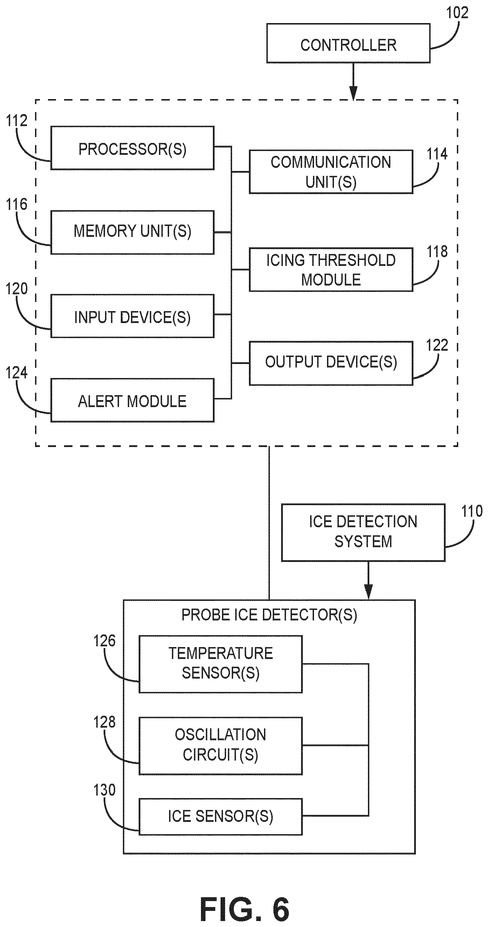

Ice detectors 16 can be disposed within surfaces of the aircraft such as the engine cowl, fuselage, or wing. When one of ice detectors 16 accretes enough ice to undergo a specified frequency shift (as described above in reference to FIG. 4), an icing conditions signal can be sent from that ice detector 16 to controller 102. Controller 102 can verify the icing conditions signal using an icing threshold module (such as icing threshold module 118, described below in reference to FIG. 6). Controller 102 can then suppress or send an icing conditions alert to cockpit annunciation system 104, as well as engine cowl de-icing system 106 and/or wing de-icing system 108. Cockpit annunciation system 104 can be configured to display an alert message, emit an audible repeating or non-repeating signal, or otherwise inform a person in the cockpit of the icing conditions which have been detected by ice detector(s) 16. Engine cowl de-icing system 106 and wing de-icing system 108 can be selectively activated based on the number and frequency of ice accretion cycles as shown in FIG. 4. In some examples, engine cowl de-icing system 106 and/or wing de-icing system 108 can be activated by input from the cockpit which is processed by controller 102.

FIG. 6 is a system diagram illustrating modules of controller 102 that interfaces with ice detection system 110. Controller 102 includes processor(s) 112, communication unit(s) 114, memory unit(s) 116, icing threshold module 118, input device(s) 120, output device(s) 122, and alert module 124. Ice detection system 110 can include one or more ice detectors 16 (shown in FIGS. 2-3). Ice detector(s) 16 can include temperature sensor(s) 126, oscillation circuit(s) 128, and ice sensor(s) 130. While controller 102 is illustrated separately from ice detection system 110 for clarity, controller 102 can be a component of ice detection system 110. Ice detection system 110 can additionally include an external aircraft surface, such as external wing surface 20, engine cowl 18, another surface of the nacelle of engine 12, or the fuselage surface (shown in FIG. 1).

As described above, controller 102 can include processor 112, communication unit 114, memory unit 116, input device 120, and output device 122. In some examples, controller 102 can include multiple processors 112, communication units 114, memory units 116, input devices 120, and/or output devices 122. In other examples, one or more of processor 112, communication unit 114, memory unit 116, icing threshold module 118, input device 120, output device 122, and alert module 124 can be externally located to controller 102. Controller 102 can additionally include more components, such as a power source. It should be understood that, while reference is made to a single controller 102 for clarity, in some examples there can be multiple controllers 102 and/or multiple systems (which can include redundancies) which make up a single controller 102. Additionally, while the components of controller 102 are described below as discrete parts, any of the disclosed components can form a subcomponent of the other disclosed components or can otherwise be combined. In some examples, controller 102 is a component of ice detector 16 and can be embedded partially or entirely within ice detector 16 (such that some or all of the components of controller 102 are also part of ice detector 16).

Processor 112 can be configured to implement functionality and/or process instructions for execution within controller 102. For example, processor 112 can be capable of processing instructions stored in memory unit 116. Processor 112 can be any one or more of a microprocessor, a digital signal processor (DSP), an application specific integrated circuit (ASIC), a field-programmable gate array (FGPA), or other equivalent discrete or integrated logic circuitry. In some examples, processor 112 can be configured to calculate an icing threshold temperature, above which icing conditions are unlikely to occur. Processor 112 can calculate this icing threshold temperature using one or more environmental and operational parameters. According to the invention, the calculation of the icing threshold temperature can include an offset value of the expected residual heat experienced by temperature sensor 126. This residual heat can be from electronics within or near temperature sensor 126. The calculation of the icing threshold temperature can additionally and/or alternatively include the total air temperature experienced by temperature sensor 126. Airflow has an amount of kinetic energy which can vary based on the speed of the airflow relative to the aircraft, and the total air temperature incorporates this kinetic energy value. In an illustrative example not covered by the scope of the appended claims, the calculation of the icing threshold temperature can additionally and/or alternatively include a known or expected tolerance of the temperature sensor.

Controller 102 can also include communication unit 114. Controller 102 can utilize communication unit 114 to communicate with other components of controller 102 and external devices via one or more networks, such as one or more wireless and/or wired networks. Communication unit 114 can be a network interface card, such as an Ethernet card, an optical transceiver, a radio frequency transceiver, or any other type of device that can send and receive information. For example, communication unit 114 can be a radio frequency transmitter dedicated to Bluetooth or WiFi bands or commercial networks such as GSM, UMTS, 3G, 4G, 5G, and others. Alternatively, communication unit 114 can be a Universal Serial Bus (USB) or can utilize ARINC, CAN Bus, or RS-485 protocols.

Memory unit 116 can be configured to store information within controller 102 during operation. Memory unit 116, in some examples, is described as a computer-readable storage medium. In some examples, a computer-readable storage medium can include a non-transitory medium. The term "non-transitory" can indicate that the storage medium is not embodied in a carrier wave or a propagated signal. In certain examples, a non-transitory storage medium can store data that can, over time, change (e.g., in RAM or cache). In some examples, memory unit 116 is a temporary memory, meaning that a primary purpose of memory unit 116 is not long-term storage. Memory unit 116, in some examples, is described as volatile memory, meaning that memory unit 116 does not maintain stored contents when power to controller 102 is turned off. Examples of volatile memories can include random access memory (RAM), dynamic random access memory (DRAM), static random access memory (SRAM), and other forms of volatile memory. In some examples, memory unit 116 is used to store program instructions for execution by processor 112.

Memory unit 116 can be configured to store larger amounts of information than volatile memory. Memory unit 116 can further be configured for long-term storage of information. In some examples, memory unit 116 includes non-volatile storage elements. Examples of such non-volatile storage elements can include magnetic hard discs, optical discs, flash memory, or forms of erasable programmable read-only memory (EPROM) or electrically erasable programmable read-only (EEPROM) memory.

Icing threshold module 118 can be an algorithm or other software program which can analyze input data about the temperature and vibrational frequency of probe 24 in order to verify or suppress icing conditions alerts. In some examples, icing threshold module 118 can be configured to receive a selected icing threshold temperature from a component of controller 102, such as input device 120. Icing threshold module 118 can be configured to receive temperature measurements from temperature sensor 126 and ice accretion signals from ice sensor 130. Icing threshold module 118 can be further configured to compare the temperature measurement to the icing threshold temperature and determine if the temperature measurement is above the icing threshold temperature. Controller 102 can be configured to suppress an icing conditions alert if the temperature measurement is above the icing threshold temperature. Conversely, controller 102 can allow the icing conditions alert to be communicated to alert module 124 if the temperature measurement is at or below the icing threshold temperature.

Input device 120 can include a mouse, a keyboard, a microphone, a camera device, a presence-sensitive and/or touch-sensitive display, or other type of device configured to receive input from a user. Input device 120 can, in some examples, be configured to allow a user to select an icing threshold temperature. Output device 122 can include a display device, a sound card, a video graphics card, a speaker, a liquid crystal display (LCD), a light emitting diode (LED) display, an organic light emitting diode (OLED) display, or other type of device for outputting information in a form understandable to users or machines. Output device 122 can form part of cockpit annunciation system 104 (described above in reference to FIG. 5).

Alert module 124 can be hardware- or software-based. In some examples, alert module can be a software program which is configured to communicate and/or display alerts.

Temperature sensor 126 can be a sensor which is situated and configured to measure the temperature experienced by probe 24. In the example depicted in FIG. 6, temperature sensor 126 is a component of ice detector 16. In other examples, temperature sensor 126 can be located within or adjacent to probe 24, within strut 26 or electronics housing 30, or completely external to ice detector 16. For examples where temperature sensor 126 is external to and separately located from ice detector 16, ice detector 16 can be configured to receive the aircraft temperature sensor signal from an aircraft data bus and use that temperature measurement to determine whether to suppress the icing conditions signal.

Oscillation circuit 128 can include drive coil 34 and feedback coil 36 (both described above in reference to FIG. 3). Oscillation circuit 128 drives probe 24 to vibrate at a set resonant frequency. Ice sensor 130 is a suitable means for sensing or measuring one or more parameters which can indicate the presence of icing conditions. In examples where ice detector 16 is a probe ice detector, ice sensor 130 can be a sensor which is configured to receive vibration data from feedback coil 36 within oscillation circuit 128. As described above in reference to FIG. 4, the frequency shift of probe 24 can indicate ice accretion on probe 24. Ice sensor 130 can generate an ice accretion signal if the frequency shift of probe 24 reaches a set point (such as frequency shift maximum point Fₘₐₓ, described above in reference to FIG. 4).

As described in more detail below, the components of controller 102 can be configured to verify and/or suppress icing conditions alerts generated when ice sensor 130 of ice detector 16 detects a shift in the vibrational frequency of probe 24.

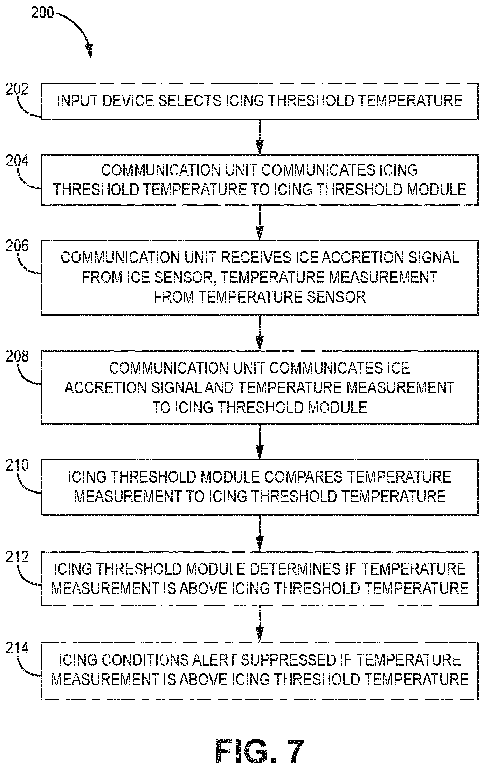

FIG. 7 is a flowchart illustrating method 200 of verifying icing signals generated by an ice detector. Method 200 includes steps 202-214.

In step 202, an input device (such as input device 120, described above in reference to FIG. 6) selects an icing threshold temperature, above which icing conditions alerts can be suppressed. This selection can be done automatically or manually, and can be selected based on one or more user inputs or calculated with expected parameters, or the threshold could be fixed as part of the design. As described above in reference to FIG. 6, these parameters can include an offset to account for residual heat from electronics (which depends on the location of ice detector 16 on aircraft 10), and/or total temperature effects to account for the kinetic energy of the airflow. Alternatively, this selection of an icing threshold temperature can be done with icing threshold module 118 directly.

In step 204, a communication unit (such as communication unit 114, described above in reference to FIG. 6) communicates the icing threshold temperature selected in step 202 to an icing threshold module (such as icing threshold module 118, described above in reference to FIG. 6). This can be performed through the use of one or more wired or wireless networks.

In step 206, the communication unit receives an ice accretion signal from an ice sensor within an ice detector (such as ice sensor 130 within ice detector 16, described above in reference to FIG. 3) when icing conditions are detected. For a magnetostrictive probe ice detector, icing conditions are detected when the vibrational frequency of the probe shifts by a selected amount. The communication unit further receives a temperature measurement from a temperature sensor (such as temperature sensor 126, described above in reference to FIG. 3). This temperature measurement can be the total air temperature experienced by the ice detector.

In step 208, the communication unit communicates the ice accretion signal and the temperature measurement to the icing threshold module. This can be performed in the same manner as step 204, or another suitable communication method.

In step 210, the icing threshold module compares the temperature measurement received in step 208 to the icing threshold temperature selected in step 202. This can be performed using conventional calculation methods.

In step 212, the icing threshold module determines if the temperature measurement received in step 208 is above the icing threshold temperature.

In step 214, an icing conditions alert can be suppressed if the icing threshold module determines that the temperature measurement is above the icing threshold temperature. Generally, an icing conditions alert can be communicated to the cockpit if ice accretion is detected on the probe by the ice sensor. However, if the temperature experienced by the probe is above the icing threshold temperature, it is unlikely that icing conditions are present and the icing conditions alert can therefore be suppressed before it is communicated to the cockpit. The suppression of the icing conditions alert can be performed by one or more components of controller 102, such as alert module 124, output device 122, and/or icing threshold module 118. The icing conditions alert can be suppressed after it is generated (i.e., suppressed in transit) or can be suppressed by not being generated.

An ice detector as described herein provides numerous advantages. An icing threshold module for use with an ice detector can help to verify ice accretion signals. This can decrease the number of spurious icing signals, decrease energy usage and costs associated with running de-icing systems, and increase user confidence in the ice detection system.

While the invention has been described with reference to an exemplary embodiment(s), it will be understood by those skilled in the art that various changes may be made without departing from the scope of the invention, which is defined in the appended claims. In addition, many modifications may be made to adapt a particular situation or material to the teachings of the invention without departing from the essential scope thereof. Therefore, the invention is not limited to the particular embodiment(s) disclosed, but the invention includes all embodiments falling within the scope of the appended claims.

## Claims

1. An ice detection system for an aircraft, the ice detection system comprising:
an ice detector (16) configured to be disposed in an external aircraft surface, the ice detector comprising an ice sensor (130);
a temperature sensor (126); and
a controller (102) comprising:
an icing threshold module (118) which is configured to:
receive a temperature measurement from the temperature sensor;
receive an ice accretion signal from the ice sensor;
receive a selected icing threshold temperature from the controller, the icing threshold temperature calculated using at least one of: an offset value of expected residual heat experienced by the temperature sensor, and a total air temperature experienced by the temperature sensor due to a kinetic energy of airflow;
compare the temperature measurement to the icing threshold temperature; and
determine whether the temperature measurement is above the icing threshold temperature;
wherein the controller is configured to suppress an icing conditions alert if the temperature measurement is above the icing threshold temperature.

2. The ice detection system of claim 1, wherein the external aircraft surface is an external wing surface (20); and optionally wherein the external wing surface (20) is a bottom external wing surface and the ice detector extends downward and away from the bottom external wing surface (22).

3. The ice detection system of claim 1, wherein the external aircraft surface is selected from the group comprising: an external fuselage surface, an external engine nacelle surface, and an internal engine nacelle surface.

4. The ice detection system of any preceding claim, wherein the ice detector (16) is a magnetostrictive probe ice detector.

5. The ice detection system of any preceding claim, wherein the icing threshold module (118) is further configured to receive the icing threshold temperature from an input device (120) of the controller.

6. The ice detection system of any preceding claim, wherein the temperature sensor (126) is a component of the ice detector (16).

7. The ice detection system of any preceding claim, wherein the ice detector (16) is a probe ice detector further comprising a probe (24) extending away from the external aircraft surface.

8. The ice detection system of claim 7, wherein the ice detector (16) further comprises:
a mounting plate (28) adjacent to the external aircraft surface, wherein the mounting plate secures the ice detector (28) to the external aircraft surface;
a strut (26) from which the probe (24) extends and which is situated between the probe and the mounting plate; and
an oscillation circuit (128) situated within the ice detector.

9. The ice detection system of claim 7 or 8, wherein the external aircraft surface is a bottom external wing surface (22) and the probe (24) extends downward and away from the bottom external wing surface.

10. The ice detection system of any preceding claim, wherein the controller (102) is a component of the ice detector (16).

11. A method of verifying ice accretion signals from an ice detector of an aircraft, the method comprising:
selecting, with an input device of a controller, an icing threshold temperature by calculating, with a processor of the controller, the icing threshold temperature using at least one of: an offset value of expected residual heat experienced by the temperature sensor, and a total air temperature experienced by the temperature sensor due to a kinetic energy of airflow;
communicating, with a communication unit of the controller, the icing threshold temperature to an icing threshold module of the controller;
receiving, with the communication unit, an ice accretion signal from an ice sensor of the ice detector and a temperature measurement from a temperature sensor of the aircraft;
communicating, with the communication unit, the ice accretion signal and the temperature measurement to the icing threshold module;
comparing, with the icing threshold module, the temperature measurement to the icing threshold temperature;
determining, with the icing threshold module, if the temperature measurement is above the icing threshold temperature; and
suppressing, with the controller, an icing conditions alert if the temperature measurement is above the icing threshold temperature.

12. The method of claim 11, wherein the icing threshold value is selected by a user and entered into the input device.

13. The method of claim 11 or 12, wherein suppressing the icing conditions alert comprises communicating, with the communication unit, to an alert module of the controller that the temperature measurement is above the icing threshold measurement and that icing conditions are not present.

14. The method of any of claims 11 to 13, further comprising sending an icing conditions alert to an alert module of the controller if the temperature measurement is below the icing threshold measurement.

## Patentansprüche

1. Eisdetektionssystem für ein Luftfahrzeug, wobei das Eisdetektionssystem Folgendes umfasst:
einen Eisdetektor (16), der zum Anordnen in einer Außenfläche des Luftfahrzeugs konfiguriert ist, wobei der Eisdetektor einen Eissensor (130) umfasst;
einen Temperatursensor (126); und
eine Steuerung (102), umfassend:
ein Vereisungsschwellenwertmodul (118), das zu Folgendem konfiguriert ist:
Empfangen einer Temperaturmessung von dem Temperatursensor;
Empfangen eines Eisansatzsignals von dem Eissensor;
Empfangen einer ausgewählten Vereisungsschwellenwerttemperatur von der Steuerung, wobei die Vereisungsschwellenwerttemperatur unter Verwendung von mindestens einem der Folgenden berechnet wird: einem Korrekturwert für eine erwartete Restwärme, die der Temperatursensor erfährt, und einer Gesamtlufttemperatur, die der Temperatursensor aufgrund einer kinetischen Energie des Luftstroms erfährt;
Vergleichen der Temperaturmessung mit der Vereisungsschwellenwerttemperatur; und
Bestimmen, ob die Temperaturmessung über der Vereisungsschwellenwerttemperatur liegt;
wobei die Steuerung zum Unterdrücken einer Warnung vor Vereisungsbedingungen konfiguriert ist, wenn die Temperaturmessung über der Vereisungsschwellenwerttemperatur liegt.

2. Eisdetektionssystem nach Anspruch 1, wobei die Außenfläche des Luftfahrzeugs eine Außenfläche eines Flügels (20) ist; und wobei die Außenfläche eines Flügels (20) optional eine untere Außenfläche eines Flügels ist und der Eisdetektor sich nach unten und von der unteren Außenfläche eines Flügels (22) weg erstreckt.

3. Eisdetektionssystem nach Anspruch 1, wobei die Außenfläche des Luftfahrzeugs ausgewählt ist aus der Gruppe, umfassend: eine Außenfläche des Rumpfs, eine Außenfläche der Triebwerksgondel und eine Innenfläche der Triebwerksgondel.

4. Eisdetektionssystem nach einem der vorhergehenden Ansprüche, wobei der Eisdetektor (16) ein Eisdetektor mit magnetostriktiver Sonde ist.

5. Eisdetektionssystem nach einem der vorhergehenden Ansprüche, wobei das Vereisungsschwellenwertmodul (118) ferner zum Empfangen der Vereisungsschwellenwerttemperatur von einer Eingabevorrichtung (120) der Steuerung konfiguriert ist.

6. Eisdetektionssystem nach einem der vorhergehenden Ansprüche, wobei der Temperatursensor (126) eine Komponente des Eisdetektors (16) ist.

7. Eisdetektionssystem nach einem der vorhergehenden Ansprüche, wobei der Eisdetektor (16) ein Sondeneisdetektor ist, der ferner eine Sonde (24) umfasst, die sich von der Außenfläche des Luftfahrzeugs weg erstreckt.

8. Eisdetektionssystem nach Anspruch 7, wobei der Eisdetektor (16) ferner Folgendes umfasst:
eine Montageplatte (28) neben der Außenfläche des Luftfahrzeugs, wobei die Montageplatte den Eisdetektor (28) an der Außenfläche des Luftfahrzeugs befestigt;
eine Strebe (26), von der sich die Sonde (24) erstreckt und die sich zwischen der Sonde und der Montageplatte befindet; und einen sich in dem Eisdetektor befindenden Schwingkreis (128).

9. Eisdetektionssystem nach Anspruch 7 oder 8, wobei die Außenfläche des Luftfahrzeugs eine untere Außenfläche eines Flügels (22) ist und die Sonde (24) sich nach unten und von der unteren Außenfläche eines Flügels weg erstreckt.

10. Eisdetektionssystem nach einem der vorhergehenden Ansprüche, wobei die Steuerung (102) eine Komponente des Eisdetektors (16) ist.

11. Verfahren zum Verifizieren von Eisansatzsignalen von einem Eisdetektor eines Luftfahrzeugs, wobei das Verfahren Folgendes umfasst:
Auswählen einer Vereisungsschwellenwerttemperatur mit einer Eingabevorrichtung einer Steuerung durch Berechnen der Vereisungsschwellenwerttemperatur mit einem Prozessor der Steuerung unter Verwendung von mindeste ns einem der Folgenden:
einem Korrekturwert für eine erwarteten Restwärme, die der Temperatursensor erfährt, und einer Gesamtlufttemperatur, die der Temperatursensor aufgrund einer kinetischen Energie des Luftstroms erfährt;
Übermitteln der Vereisungsschwellenwerttemperatur mit einer Kommunikationseinheit der Steuerung an ein Vereisungsschwellenwertmodul der Steuerung;
Empfangen eines Eisansatzsignals von einem Eissensor des Eisdetektors und einer Temperaturmessung von einem Temperatursensor des Luftfahrzeugs mit der Kommunikationseinheit;
Übermitteln des Eisansatzsignals und der Temperaturmessung an das Vereisungsschwellenwertmodul mit der Kommunikationseinheit;
Vergleichen der Temperaturmessung mit der Vereisungsschwellenwerttemperatur mit dem Vereisungsschwellenwertmodul;
Bestimmen mit dem Vereisungsschwellenwertmodul, ob die Temperaturmessung über der Vereisungsschwellenwerttemperatur liegt; und
Unterdrücken einer Warnung vor Vereisungsbedingungen mit der Steuerung, wenn die Temperaturmessung über der Vereisungsschwellenwerttemperatur liegt.

12. Verfahren nach Anspruch 11, wobei der Vereisungsschwellenwert durch einen Benutzer ausgewählt und in die Eingabevorrichtung eingegeben wird.

13. Verfahren nach Anspruch 11 oder 12, wobei das Unterdrücken der Warnung vor Vereisungsbedingungen Übermitteln mit der Kommunikationseinheit an ein Warnmodul der Steuerung umfasst, dass die Temperaturmessung über der Vereisungsschwellenwertmessung liegt und dass keine Vereisungsbedingungen vorliegen.

14. Verfahren nach einem der Ansprüche 11 bis 13, ferner umfassend Senden einer Warnung über Vereisungsbedingungen an ein Warnmodul der Steuerung, wenn die Temperaturmessung unter dem Vereisungsschwellenwert liegt.

## Revendications

1. Système de détection de givre pour un aéronef, le système de détection de givre comprenant :
un détecteur de givre (16) configuré pour être disposé dans une surface d'aéronef externe, le détecteur de givre comprenant un capteur de givre (130) ;
un capteur de température (126) ; et
un dispositif de commande (102) comprenant :
un module de seuil de givrage (118) qui est configuré pour :
recevoir une mesure de température à partir du capteur de température ;
recevoir un signal d'accumulation de givre à partir du capteur de givre ;
recevoir une température seuil de givrage choisie à partir du dispositif de commande, la température seuil de givrage étant calculée en utilisant au moins l'un de : une valeur de décalage de chaleur résiduelle attendue subie par le capteur de température, et une température d'air totale subie par le capteur de température en raison d'une énergie cinétique de flux d'air ;
comparer la mesure de température à la température seuil de givrage ; et
déterminer si la mesure de température est au-dessus de la température seuil de givrage ;
dans lequel le dispositif de commande est configuré pour supprimer une alerte de conditions de givrage si la mesure de température est au-dessus de la température seuil de givrage.

2. Système de détection de givre selon la revendication 1, dans lequel la surface d'aéronef externe est une surface d'aile externe (20) ; et éventuellement dans lequel la surface d'aile externe (20) est une surface d'aile externe inférieure et le détecteur de givre se prolonge vers le bas et à l'opposé de la surface d'aile externe inférieure (22).

3. Système de détection de givre selon la revendication 1, dans lequel la surface d'aéronef externe est choisie dans un groupe composé de : une surface de fuselage externe, une surface de nacelle de moteur externe et une surface de nacelle de moteur interne.

4. Système de détection de givre selon une quelconque revendication précédente, dans lequel le détecteur de givre (16) est un détecteur de givre à sonde magnétostrictive.

5. Système de détection de givre selon une quelconque revendication précédente, dans lequel le module de seuil de givrage (118) est également configuré pour recevoir la température seuil de givrage à partir d'un dispositif d'entrée (120) du dispositif de commande.

6. Système de détection de givre selon une quelconque revendication précédente, dans lequel le capteur de température (126) est un composant du détecteur de givre (16).

7. Système de détection de givre selon une quelconque revendication précédente, dans lequel le détecteur de givre (16) est un détecteur de givre à sonde comprenant également une sonde (24) se prolongeant à l'opposé de la surface d'aéronef externe.

8. Système de détection de givre selon la revendication 7, dans lequel le détecteur de givre (16) comprend également :
une plaque de montage (28) adjacente à la surface d'aéronef externe, dans lequel la plaque de montage fixe le détecteur de givre (28) à la surface d'aéronef externe ;
une entretoise (26) à partir de laquelle se prolonge la sonde (24) et qui est située entre la sonde et la plaque de montage ; et
un circuit d'oscillation (128) situé à l'intérieur du détecteur de givre.

9. Système de détection de givre selon la revendication 7 ou 8, dans lequel la surface d'aéronef externe est une surface d'aile externe inférieure (22) et la sonde (24) se prolonge vers le bas et à l'opposé de la surface d'aile externe inférieure.

10. Système de détection de givre selon une quelconque revendication précédente, dans lequel le dispositif de commande (102) est un composant du détecteur de givre (16).

11. Procédé de vérification de signaux d'accrétion de givre à partir d'un détecteur de givre d'un aéronef, le procédé comprenant :
la sélection, avec un dispositif d'entrée d'un dispositif de commande, d'une température seuil de givrage en calculant, avec un processeur du dispositif de commande, la température seuil de givrage en utilisant au moins l'un de : une valeur de décalage de chaleur résiduelle attendue subie par le capteur de température, et une température d'air totale subie par le capteur de température en raison d'une énergie cinétique de flux d'air ;
la communication, avec une unité de communication du dispositif de commande, de la température seuil de givrage à un module de seuil de givrage du dispositif de commande ;
la réception, avec l'unité de communication, d'un signal d'accrétion de givre à partir d'un capteur de givre du détecteur de givre et d'une mesure de température à partir d'un capteur de température de l'aéronef ;
la communication, avec l'unité de communication, du signal d'accrétion de givre et de la mesure de température au module de seuil de givrage ;
la comparaison, avec le module de seuil de givrage, de la mesure de température à la température seuil de givrage ;
la détermination, avec le module de seuil de givrage, de si la mesure de température est au-dessus de la température seuil de givrage ; et
la suppression, avec le dispositif de commande, d'une alerte de conditions de givrage si la mesure de température est au-dessus de la température seuil de givrage.

12. Procédé selon la revendication 11, dans lequel la valeur seuil de givrage est choisie par un utilisateur et entrée dans le dispositif d'entrée.

13. Procédé selon la revendication 11 ou 12, dans lequel la suppression de l'alerte de conditions de givrage comprend la communication, avec l'unité de communication, à un module d'alerte du dispositif de commande que la mesure de température est au-dessus de la mesure de seuil de givrage et que les conditions de givrage ne sont pas présentes.

14. Procédé selon l'une quelconque des revendications 11 à 13, comprenant également l'envoi d'une alerte de conditions de givrage à un module d'alerte du dispositif de commande si la mesure de température est au-dessous de la mesure de seuil de givrage.
